# EUROPEAN PATENT SPECIFICATION

(11) **EP 1 955 475 B1**
(45) Date of publication and mention of the grant of the patent: **14.08.2013**
(21) Application number: 06803373.7
(22) Date of filing: 12.09.2006
(51) Int. Cl.: H04L 12/18

(54) **BROADCAST CONTENT REQUEST FOR MOBILE DEVICES**
AUSSTRAHLUNGSINHALTSANFORDERUNG FÜR MOBILGERÄTE
DEMANDE DE CONTENU DE DIFFUSION POUR DISPOSITIFS MOBILES

(30) Priority: 02.12.2005 US 164728
(43) Date of publication of application: 13.08.2008
(73) Proprietor: Sony Ericsson Mobile Communications AB, 221 88 Lund (SE)
(72) Inventor: PANTALONE, Brett, A., Pittsboro, North Carolina 27312 (US); CAMP, William, O._Jr., Chapel Hill, North Carolina 27514 (US); HOMILLER, Daniel, Paul, Cary, North Carolina 27513 (US)
(74) Representative: Isarpatent
(86) International application number: PCT/US2006/035401
(87) International publication number: WO 2007/064380

(56) References cited:
- WO-A-01/50689
- WO-A2-2005/048295
- US-A1- 2002 018 450
- US-A1- 2002 092 019

## Description

### BACKGROUND OF THE INVENTION

The present invention relates to portable mobile communications devices and systems, and more particularly to a portable mobile communications device, system and method that can control the distribution broadcast signals received from a mobile broadcast service.

Portable mobile communications devices such as mobile phones are becoming more sophisticated and include many new features and capabilities. One such feature is the capability to receive mobile broadcast signals, mobile television, or the like. Such services include digital video broadcast-handheld (DVB-H), digital media broadcast (DMB), integrated services digital broadcast-terrestrial (ISDB-T), mobile broadcast multi-cast service (MBMS), or similar.technologies. When integrated into a mobile phone, all of the aforementioned technologies utilize a separate mobile broadcast tuner except for MBMS which can be received using the portable mobile communications device existing mobile radio receiver and transmitter.

The mobile broadcast service provider is bandwidth constrained to a limited number of channels that can be broadcast at any given moment. However, there may be circumstances when a mobile user may only be interested in a specific subset of broadcast offerings. Under these circumstances, the user may wish to request which channels the mobile broadcast service provider will broadcast over the limited bandwidth spectrum.

Currently, there are no provisions addressing the user's dilemma described above. What is needed is a mechanism that allows the user to request specific channels from the mobile broadcast service provider.

U.S. patent application US2002/0018450 discloses a communique board cast system wherein content is selected based on subscribes profiles, requested services and subscribes active in the communication network.

### BRIEF SUMMARY OF THE INVENTION

In accordance with an embodiment of the present invention, there is disclosed is a method of requesting content from a mobile broadcast service provider wherein the mobile broadcast service provider maintains a variety of content offerings that can be broadcast to a portable mobile communications device. The method comprises creating a subscription profile on the portable mobile communications device that includes requested content from the content offered by the mobile broadcast service provider. The subscription profile is sent to the mobile broadcast service provider so that the mobile broadcast service provider can aggregate the requested content onto a plurality of time multiplexed channels. The plurality of time multiplexed channels are then broadcast to the portable mobile communications device. The portable mobile communications device then de-multiplexes the time multiplexed channels of requested content to display the requested content.

The method can further comprise detecting whether the portable mobile communications device is currently connected to the mobile broadcast service provider. If connected then, the content associated with the subscription profile will be considered when aggregating requested content onto a plurality of time multiplexed channels. Otherwise, the mobile broadcast service provider will ignore the profile(s) of portable mobile communications device(s) that are not currently connected to the mobile broadcast service provider.

In another embodiment, a voting profile is used instead of a subscription profile. In this method, the portable mobile communications device requests specific content from the mobile broadcast service provider in order of preference. The mobile broadcast service provider then tallies current votes to determine the most voted for content. The most voted for content is then aggregated onto the plurality of time multiplexed channels until channel capacity is exhausted before being broadcast.

### BRIEF DESCRIPTION OF THE DRAWINGS

Figure 1 is a block diagram of an exemplary system for making and communicating a channel request from a portable mobile communications device to a mobile broadcast service provider.
Figure 2 is a block diagram of an exemplary portable mobile communications device for use within the system of Figure 1.
Figure 3 is a flow chart of a method for making and communicating a channel request from a portable mobile communications device to a mobile broadcast service provider.
Figure 4 is a data flow diagram illustrating pertaining to network presence detection.

### DETAILED DESCRIPTION OF THE INVENTION

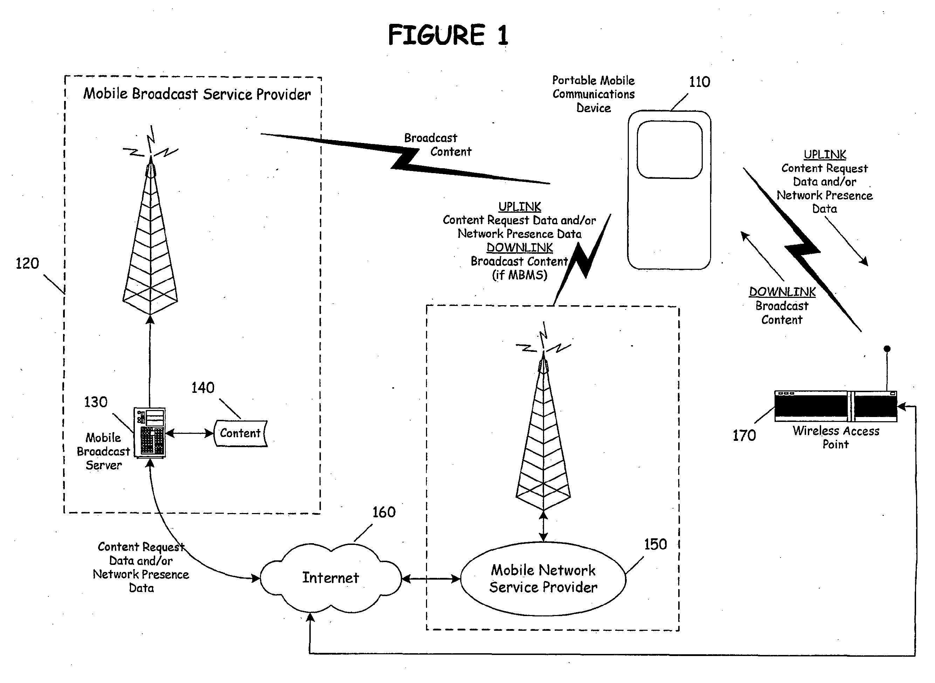

Figure 1 is a block diagram of an exemplary system for making and communicating a channel request from a portable mobile communications device 110 to a mobile broadcast service provider 120. The mobile broadcast service provider 120 may be a digital video broadcast-handheld (DVB-H), digital media broadcast (DMB), integrated services digital broadcast-terrestrial (ISDB-T), mobile broadcast multi-cast service (MBMS), or other similar technology. When integrated into a mobile phone, all of the aforementioned technologies utilize a separate mobile broadcast receiver except for MBMS which can be received using the portable mobile communications device's existing mobile radio receiver and transmitter over the portable mobile communications device's mobile network service provider 150.

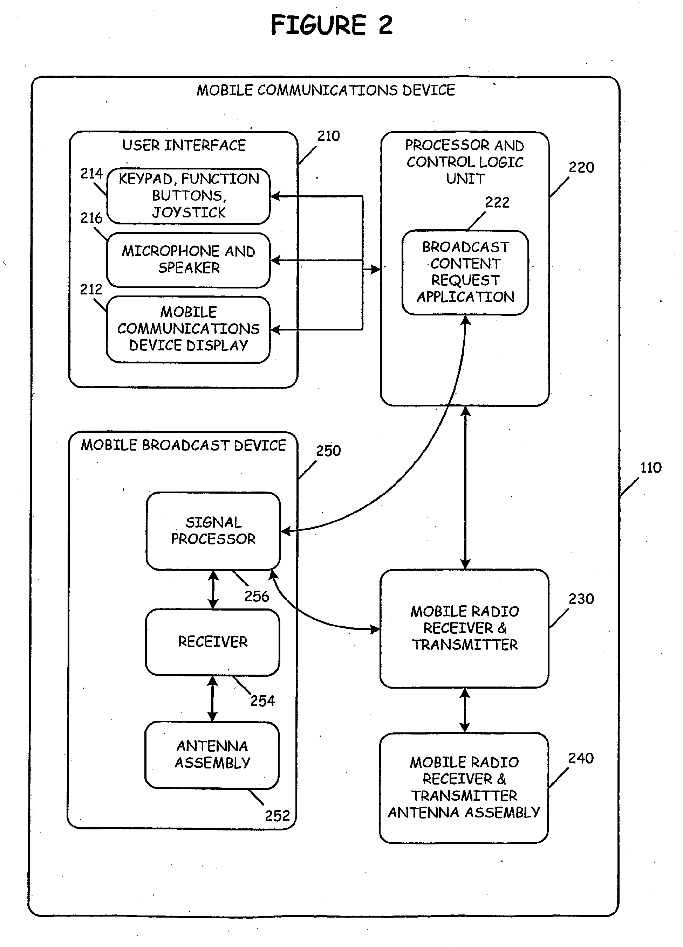

The portable mobile communications device 110 may be a cordless telephone, cellular telephone, personal digital assistant (PDA), communicator, computer device or the like and is not unique to any particular communications standard, such as Advanced Mobile Phone Service (AMPS), Digital Advanced Mobile Phone Service (D-AMPS), Global System for Mobile Communications (GSM), Code Division Multiple Access (CDMA) or the like. The design of the portable mobile communications device 110 illustrated in Figure 2 is for purposes of explaining the present invention and the present invention is not limited to any particular design.

The portable mobile communications device 110 shown in Figure 2 may include an operator or user interface 210 to facilitate controlling operation of the portable mobile communications device 110 including initiating and conducting phone calls and other communications. The user interface 210 may include a display 212 to provide visual signals to a subscriber or user as to the status and operation of the portable mobile communications device 110. The display 212 may be a liquid crystal display (LCD) or the like capable of presenting color images. The display 212 may provide information to a user or operator in the form of images, text, numerals, characters, a graphical user interface (GUI) and the like.

The user interface 212 may also include a keypad and function keys or buttons 214 including a pointing device, such as a joystick or the like. The keypad, function buttons and joystick 214 permit the user to communicate commands to the portable mobile communications device 110 to dial phone numbers, initiate and terminate calls, establish other communications, such as access to a mobile broadcast service provider 120, the Internet 160, send and receive email, text messages and the like over the mobile network service provider 150. The keypad, function buttons and joystick 214 may also be used to control other operations of the portable mobile communications device 110. The keypad, function buttons and joystick 214 may also be implemented on a touch sensitive display adapted to receive tactile input.

The display 212, keypad, and function buttons 214 may be coupled to a main processor and control logic unit 220. The processor and control logic unit 220 may be a microprocessor or the like. The processor and logic unit 220 may include a broadcast request application 222 for making channel requests to the mobile broadcast service provider 120 as well as de-multiplexing incoming channels. The broadcast request application 222 may be embodied in hardware, firmware, software (data structures) or combinations thereof. The processor and logic unit 220 may also include other data structures, software programs, computer applications and the like to encode and decode control signals; perform communication procedures and other functions as described herein.

With respect to traditional portable mobile communications device operations, the user interface 210 may also include a microphone and a speaker 216. The microphone 216 may receive audio or acoustic signals from a user or from another acoustic source. The microphone 216 may convert the audio or acoustic signals to electrical signals. The microphone 216 may be connected to the processor and logic unit 220 wherein the processor and logic unit 220 may convert the electrical signals to baseband communication signals. The processor and control logic unit 220 may be connected to a mobile radio transmitter and receiver 230 that may convert baseband signals from the processor and control logic unit 220 to radio frequency (RF) signals. The mobile radio transmitter and receiver 230 may be connected to an antenna assembly 240 for transmission of the RF signals to a communication medium or system, such as a mobile network service provider 150 or the like. Mobile radio transmitter and receiver 230 can also receive mobile television broadcasts according to the MBMS standard. In this scenario, the mobile network service provider 150 acts as the mobile broadcast service provider.

The antenna assembly 240 may receive RF signals over the air and transfer the RF signals to a radio receiver 230. The radio receiver 230 may convert the RF signals to baseband signals. The baseband signals may be applied to the processor and control logic unit 220 which may convert the baseband signals to electrical signals. The processor and control unit 220 may send the electrical signals to the speaker 216 which may convert the electrical signals to audio signals that can be understood by the user.

The portable mobile communications device 110 may also include a mobile broadcast device 250. The mobile broadcast device 250 may be a DVB-H type device or the like. The mobile broadcast device 250 may be integrally formed as part of the portable mobile communications device 110 or may be a separate unit that may be connected and operate in association with the portable mobile communications device 110. The mobile broadcast device 250 may include an antenna assembly 252 for receiving broadcast signals of programming from a mobile broadcast service, provider 120. A receiver 254 may be coupled to the antenna assembly 252 to receive the broadcast signals. A signal processor 256 may receive the broadcast signals from the receiver 254 and convert the signals to a format for presentation on the display 212 of the portable mobile communications device 110.

The mobile broadcast service provider 120 may originate programming for broadcasting to portable mobile communications devices 110 or mobile television devices 250. The mobile broadcast service provider 120 may include a broadcast application server 130 and storage 140 for content to be broadcast.

The mobile broadcast service provider 120 may be connected to the Internet 160 or other private network that may utilize Internet protocol (IP) or the like. Such a connection can provide a link between the mobile broadcast service provider 120 and the mobile network service provider 150 or a wireless access point 170. It then becomes possible for the portable mobile communications device 110 to transmit or forward uplink data such as a channel request to the mobile broadcast service provider 120 utilizing its wireless link to the mobile network service provider 150 or the wireless access point followed by the Internet 160 link to the mobile broadcast service provider 120. The wireless access point also offers the possibility of point to point transmission of content from the mobile broadcast service provider 120 to the portable mobile communications device 110 via the Internet 160 and a wireless access point 170.

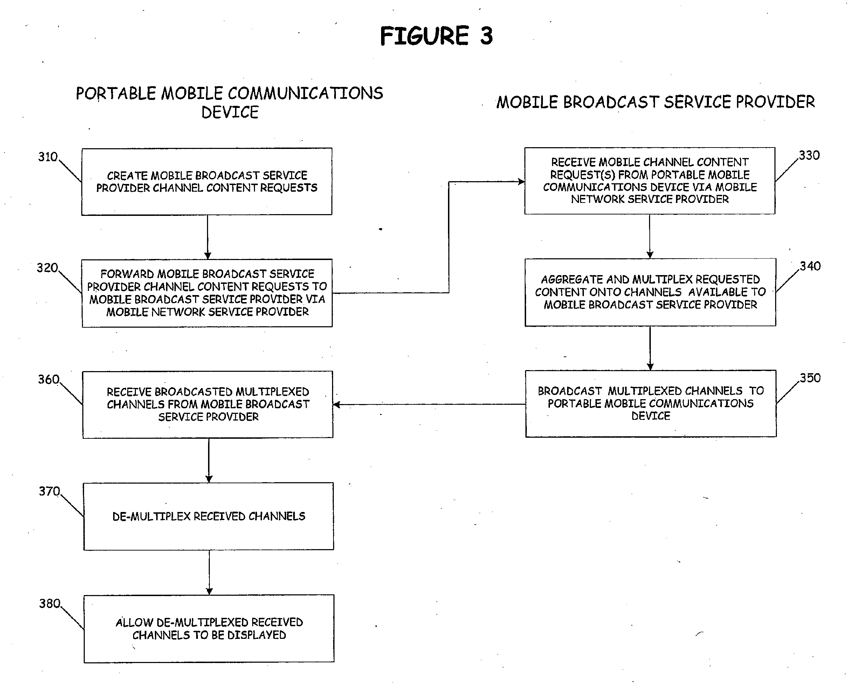

Figure 3 is a flow chart of a method for making and communicating a channel content request from a portable mobile communications device to a mobile broadcast service provider. The operations and functions illustrated in Figure 3 may be performed by the portable mobile communications device or partly by a communications device, communications system or network, mobile broadcast service provider and partly by the portable mobile communications device or any combination thereof.

In block 310, the user creates a content request intended for the mobile broadcast service provider. In block 320, the portable mobile communications device forwards the content request to the mobile broadcast service provider. The content request is sent from the portable mobile communications device to the mobile network service provider wirelessly to the mobile network service provider. It is then forwarded to the mobile broadcast service provider via an Internet connection where it is received, in block 330. Alternatively, the content request is sent from the portable mobile communications device to the mobile network service provider wirelessly to a nearby wireless access point. Similarly, it is then forwarded to the mobile broadcast service provider via an Internet connection where it is received, in block 330.

In block 340, the mobile broadcast service provider aggregates and multiplexes the requested or identified content onto channels to be broadcast out to portable mobile communications devices in block 350. In block 360, the portable mobile communications device receives the aggregated and multiplexed channels broadcast by the mobile broadcast service provider. In block 370, the portable mobile communications device de-multiplexes the received channels so as to be able to display, in block 380, the requested content on the portable mobile communications device display.

The multiplexing and de-multiplexing described above assumes that the mobile broadcast service provider has multiple channels to broadcast. In the case where the broadcast is over a single channel, the multiplexing and de-multiplexing steps are unnecessary.

From the perspective of the mobile broadcast service provider, there can be multiple methods for receiving and processing channel content requests from users of portable mobile communications devices.

One method can be based on a subscription profile for each portable mobile communications device. For this method, each portable mobile communications device crafts their own unique subscription profile containing preferred content drawn from a variety of mobile broadcast service provider offerings. The subscription profile can be stored locally on the portable mobile communications device and also sent to the mobile broadcast service provider. The mobile broadcast service provider receives and processes multiple user subscription profiles. Based on the profiles, the mobile broadcast service provider aggregates content on each of the channels to be broadcast. The content aggregated channels are then broadcast in a time multiplexed fashion out to the portable mobile communications devices. Each portable mobile communications device can then filter the received broadcast according to their own subscription profile and view the content of their choice.

An additional feature to further refine the subscription profile method involves network presence detection. In the subscription profile method above, the mobile broadcast service provider receives and maintains subscription profiles for many portable mobile communications devices. However, not every portable mobile communications device will be receiving mobile broadcasts at a given time. Thus, it would be more efficient to only consider the subscription profiles of portable mobile communications devices that are currently "connected" to the mobile broadcast service provider when aggregating content onto the channels. This reduces the chances that someone's profile is not fully satisfied due to bandwidth constraints.

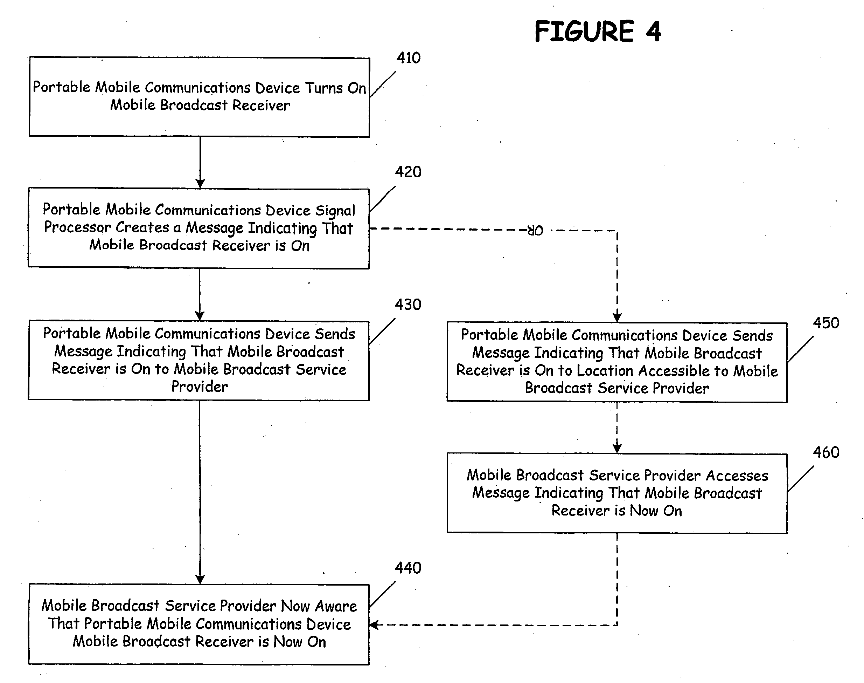

Figure 4 is a data flow diagram illustrating how to achieve network presence detection. In block 410, the portable mobile communications device turns on its associated mobile broadcast receiver. Immediately thereafter, in block 420, the portable mobile communications device signal processor creates a message indicating that the mobile broadcast receiver is active. The message can be, but is not limited to, an IMS message addressed to a pre-specified location known to the mobile broadcast service provider. In block 430, the message indicating that the mobile broadcast receiver is active is sent from the portable mobile communications device to the location where the mobile broadcast service provider can access the message. This location can be directly to a server controlled by the mobile broadcast service provider or to a separate location/server as shown in block 450. If sent to a separate location the mobile broadcast service provider, in block 460, accesses the message. Either way, as shown in block 440, the mobile broadcast service provider is now aware that the portable mobile communications device is active with its mobile broadcast receiver on.

Another method can be based on votes cast from portable mobile communications devices 110. For this method, each portable mobile communications device votes on the content they wish to receive. The mobile broadcast service provider 120 receives the votes and periodically tallies the votes and ranks the content it offers according to the number of votes it received. Then the mobile broadcast service provider 120 aggregates content on each channel from most popular on down until the bandwidth available to the mobile broadcast service provider 120 is exhausted. The content aggregated channel(s) are then broadcast in a time multiplexed fashion out to the portable mobile communications devices 110. Each portable mobile communications device 110 can then view the content.

As will be appreciated by one of skill in the art, the present invention may be embodied as a method, system, or computer program product. Accordingly, the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, the present invention may take the form of a computer program product on a computer-usable storage medium having computer-usable program code embodied in the medium.

Any suitable computer readable medium may be utilized. The computer-usable or computer-readable medium may be, for example but not limited to, an electronic, magnetic, optical, electromagnetic, infrared, or semiconductor system, apparatus, device, or propagation medium. More specific examples (a non-exhaustive list) of the computer-readable medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device. Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, propagate, or transport the program for use by or in connection with the instruction execution system, apparatus, or device.

Computer program code for carrying out operations of the present invention may be written in an object oriented programming language such as Java, Smalltalk, C++ or the like. However, the computer program code for carrying out operations of the present invention may also be written in conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through a local area network (LAN) or a wide area network (WAN), or the connection may be made to an external computer (for example, through the Internet using an Internet Service Provider).

The present invention may have been described with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer-readable memory that can direct a computer or other programmable data processing apparatus to function in a particular manner, such that the instructions stored in the computer-readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

The flowcharts and block diagrams in the Figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems which perform the specified functions or acts, or combinations of special purpose hardware and computer instructions.

Although specific embodiments have been illustrated and described herein, those of ordinary skill in the art appreciate that any arrangement which is calculated to achieve the same purpose may be substituted for the specific embodiments shown and that the invention has other applications in other environments. This application is intended to cover any adaptations or variations of the present invention. The following claims are in no way intended to limit the scope of the invention to the specific embodiments described herein.

## Claims

1. A method of requesting content from a mobile broadcast service provider wherein the mobile broadcast service provider broadcasts content to a portable mobile communications device, the method comprising:
sending a subscription profile to the mobile broadcast service provider (310) by the portable mobile communication device, the subscription profile containing content preferred by the portable mobile communications device from content offered for broadcast by the mobile broadcast service provider (319), the mobile broadcast service provider receiving and maintaining subscription profiles for many portable mobile communication devices;
determining which of the many portable mobile communications devices are currently connected to the mobile broadcast service provider (440), said determining based on the substeps of
the portable mobile communications device turning on its associated mobile broadcast receiver;
the portable mobile communications device signal processor creating a message indicating that the mobile broadcast receiver is active; and
the portable mobile communications device sending the message to a location where the mobile broadcast service provider can access the message;
aggregating only the preferred content from portable mobile communications devices currently connected to the mobile broadcast service provider (310) onto a plurality of time multiplexed channels (340);
receiving a broadcast from the mobile broadcast service provider by the portable mobile communications devices currently connected to the mobile broadcast service provider (310), the broadcast containing time multiplexed channels of preferred content (360); and de-multiplexing the time multiplexed channels of preferred content (370) by the portable mobile communications devices currently connected to the mobile broadcast service provider (310) so that each portable mobile communications device can display the associated preferred content (380).

2. A method of providing requested content from a mobile broadcast service provider to a portable mobile communications device wherein the mobile broadcast service provider broadcasts content to a portable mobile communications device, the method comprising:
receiving a content request from at least one portable mobile communications device (330), the content request derived from content offered for broadcast by the mobile broadcast service provider;
detecting whether the portable mobile communications device is currently receiving a broadcast from the mobile broadcast service provider (440), said detecting based on the substeps of:
the portable mobile communications device turning on its associated mobile broadcast receiver;
the portable mobile communications device signal processor creating a message indicating that the mobile broadcast receiver is active; and
the portable mobile communications device sending the message to a location where the mobile broadcast service provider can access the message;
aggregating requested content onto a plurality of time multiplexed channels according to most requested content from portable mobile communication devices currently receiving a broadcast from the mobile broadcast service provider 340); and
broadcasting the plurality of time multiplexed channels of aggregated requested content (350).

3. The method of claim 2 wherein the content request is part of a subscription profile that further includes portable mobile communications device identification information.

4. The method of claim 2 further comprising aggregating requested content onto the plurality of time multiplexed channels according to content requests of portable mobile communications devices that are currently receiving a broadcast from the mobile broadcast service provider.
broadcast service provider

5. A portable mobile communications device (110) for requesting content from a mobile broadcast service provider (120) wherein the mobile broadcast service provider (120) broadcasts content to the portable mobile communications device (110), the portable mobile communications device (110) comprising:
means for sending a subscription profile to the mobile broadcast service provider (222) by the portable mobile communications device, the subscription profile containing content preferred by the portable mobile communications device from content offered for broadcast by the mobile broadcast service provider (310), the mobile broadcast service provider receiving and maintaining subscription profiles for many portable mobile communications devices;
means for determining (130) which of the many portable mobile communications devices are currently connected to the mobile broadcast service provider comprising:
means for turning on the mobile broadcast receiver associated with the portable mobile communications device;
means for creating a message indicating that the mobile broadcast receiver is active; and
means for sending the message to a location where the mobile broadcast service provider can access the message;
means for receiving a broadcast from the mobile broadcast service provider (254) by the portable mobile communication devices currently connected to the mobile broadcast service provider (310), the broadcast containing time multiplexed channels of preferred content; and
means for de-multiplexing the time multiplexed channels of preferred content (222) by the portable mobile communications devices currently connected to the mobile broadcast service provider (310) so that each portable mobile communications device (110) can display the associated preferred content.

## Patentansprüche

1. Verfahren zum Anfordern von Inhalten von einem Anbieter von mobilen Ausstrahlungsdiensten, wobei der Anbieter von mobilen Ausstrahlungsdiensten Inhalte an ein tragbares Mobilkommunikationsgerät ausstrahlt, wobei das Verfahren Folgendes umfasst:
- Senden eines Teilnehmerprofils an den Anbieter von mobilen Ausstrahlungsdiensten (310) durch das tragbare Mobilkommunikationsgerät, wobei das Teilnehmerprofil Inhalte, die von dem tragbaren Mobilkommunikationsgerät bevorzugt werden, aus Inhalten, die durch den Anbieter von mobilen Ausstrahlungsdiensten (319) zur Ausstrahlung angeboten werden, umfasst, wobei der Anbieter von mobilen Ausstrahlungsdiensten Teilnehmerprofile für viele tragbare Mobilkommunikationsgeräte empfängt und verwaltet;
- Feststellen, welche der vielen tragbaren Mobilkommunikationsgeräte momentan mit dem Anbieter von mobilen Ausstrahlungsdiensten (440) verbunden sind, wobei das Feststellen auf folgenden Teilschritten basiert:
• das tragbare Mobilkommunikationsgerät schaltet seinen zugeordneten mobilen Ausstrahlungsempfänger ein;
• der Signalprozessor des tragbaren Mobilkommunikationsgerätes erzeugt eine Nachricht, die anzeigt, dass der mobile Ausstrahlungsempfänger aktiv ist; und
• das tragbare Mobilkommunikationsgerät sendet die Nachricht an einen Ort, an dem der Anbieter von mobilen Ausstrahlungsdiensten auf die Nachricht zugreifen kann;
- Aggregieren nur der bevorzugten Inhalte von tragbaren Mobilkommunikationsgeräten, die momentan mit dem Anbieter von mobilen Ausstrahlungsdiensten (310) verbunden sind, auf mehrere zeitmultiplexierte Kanäle (340);
- Empfangen einer Ausstrahlung von dem Anbieter von mobilen Ausstrahlungsdiensten durch die tragbaren Mobilkommunikationsgeräte, die momentan mit dem Anbieter von mobilen Ausstrahlungsdiensten (310) verbunden sind, wobei die Ausstrahlung zeitmultiplexierte Kanäle von bevorzugten Inhalten (360) umfasst; und
- Demultiplexieren der zeitmultiplexierten Kanäle von bevorzugten Inhalten (370) durch die tragbaren Mobilkommunikationsgeräte, die momentan mit dem Anbieter von mobilen Ausstrahlungsdiensten (310) verbunden sind, so dass jedes tragbare Mobilkommunikationsgerät die zugeordneten bevorzugten Inhalte (380) anzeigen kann.

2. Verfahren zum Übermitteln angeforderter Inhalte von einem Anbieter von mobilen Ausstrahlungsdiensten an ein tragbares Mobilkommunikationsgerät, wobei der Anbieter von mobilen Ausstrahlungsdiensten Inhalte an ein tragbares Mobilkommunikationsgerät ausstrahlt, wobei das Verfahren Folgendes umfasst:
- Empfangen einer Inhaltsanforderung von mindestens einem tragbaren Mobilkommunikationsgerät (330), wobei die Inhaltsanforderung von Inhalten abgeleitet wird, die durch den Anbieter von mobilen Ausstrahlungsdiensten zur Ausstrahlung angeboten werden;
- Detektieren, ob das tragbare Mobilkommunikationsgerät momentan eine Ausstrahlung von dem Anbieter von mobilen Ausstrahlungsdiensten (440) empfängt, wobei das Detektieren auf folgenden Teilschritten basiert:
• das tragbare Mobilkommunikationsgerät schaltet seinen zugeordneten mobilen Ausstrahlungsempfänger ein;
• der Signalprozessor des tragbaren Mobilkommunikationsgerätes erzeugt eine Nachricht, die anzeigt, dass der mobile Ausstrahlungsempfänger aktiv ist; und
• das tragbare Mobilkommunikationsgerät sendet die Nachricht an einen Ort, an dem der Anbieter von mobilen Ausstrahlungsdiensten auf die Nachricht zugreifen kann;
- Aggregieren von angeforderten Inhalten auf mehrere zeitmultiplexierte Kanäle entsprechend den am häufigsten angeforderten Inhalten von tragbaren Mobilkommunikationsgeräten, die momentan eine Ausstrahlung von dem Anbieter von mobilen Ausstrahlungsdiensten empfangen (340); und
- Ausstrahlen der mehreren zeitmultiplexierten Kanäle von aggregierten angeforderten Inhalten (350).

3. Verfahren nach Anspruch 2, wobei die Inhaltsanforderung Teil eines Teilnehmerprofils ist, das des Weiteren Identifizierungsinformationen des tragbaren Mobilkommunikationsgerätes umfasst.

4. Verfahren nach Anspruch 2, das des Weiteren umfasst, angeforderte Inhalte auf die mehreren zeitmultiplexierten Kanäle gemäß Inhaltsanforderungen von tragbaren Mobilkommunikationsgeräten, die momentan eine Ausstrahlung von dem Anbieter von mobilen Ausstrahlungsdiensten empfangen, zu aggregieren.

5. Tragbares Mobilkommunikationsgerät (110) zum Anfordern von Inhalten von einem Anbieter von mobilen Ausstrahlungsdiensten (120), wobei der Anbieter von mobilen Ausstrahlungsdiensten (120) Inhalte an das tragbare Mobilkommunikationsgerät (110) ausstrahlt, wobei das tragbare Mobilkommunikationsgerät (110) Folgendes umfasst:
- ein Mittel zum Senden eines Teilnehmerprofils an den Anbieter von mobilen Ausstrahlungsdiensten (222) durch das tragbare Mobilkommunikationsgerät, wobei das Teilnehmerprofil Inhalte, die von dem tragbaren Mobilkommunikationsgerät bevorzugt werden, aus Inhalten, die durch den Anbieter von mobilen Ausstrahlungsdiensten (310) zur Ausstrahlung angeboten werden, umfasst, wobei der Anbieter von mobilen Ausstrahlungsdiensten Teilnehmerprofile für viele tragbare Mobilkommunikationsgeräte empfängt und verwaltet;
- ein Mittel zum Festzustellen (130), welche der vielen tragbaren Mobilkommunikationsgeräte momentan mit dem Anbieter von mobilen Ausstrahlungsdiensten verbunden sind, das Folgendes umfasst:
• ein Mittel zum Einschalten des mobilen Ausstrahlungsempfängers, der dem tragbaren Mobilkommunikationsgerät zugeordnet ist;
• ein Mittel zum Erzeugen einer Nachricht, die anzeigt, dass der mobile Ausstrahlungsempfänger aktiv ist; und
• ein Mittel zum Senden der Nachricht an einen Ort, an dem der Anbieter von mobilen Ausstrahlungsdiensten auf die Nachricht zugreifen kann;
- ein Mittel zum Empfangen einer Ausstrahlung von dem Anbieter von mobilen Ausstrahlungsdiensten (254) durch die tragbaren Mobilkommunikationsgeräte, die momentan mit dem Anbieter von mobilen Ausstrahlungsdiensten (310) verbunden sind, wobei die Ausstrahlung zeitmultiplexierte Kanäle von bevorzugten Inhalten enthält; und
- ein Mittel zum Demultiplexieren der zeitmultiplexierten Kanäle von bevorzugten Inhalten (222) durch die tragbaren Mobilkommunikationsgeräte, die momentan mit dem Anbieter von mobilen Ausstrahlungsdiensten (310) verbunden sind, so dass jedes tragbare Mobilkommunikationsgerät (110) die zugeordneten bevorzugten Inhalte anzeigen kann.

## Revendications

1. Procédé de demande de contenu à un fournisseur de services de diffusion mobiles, dans lequel le fournisseur de services de diffusion mobiles diffuse un contenu vers un dispositif de communication mobile portatif, le procédé consistant à :
- envoyer un profil d'abonnement au fournisseur de services de diffusion mobiles (310) par le dispositif de communication mobile portatif, le profil d'abonnement contenant un contenu préféré par le dispositif de communication mobile portatif parmi le contenu offert à la diffusion par le fournisseur de services de diffusion mobiles (319), le fournisseur de services de diffusion mobiles recevant et maintenant des profils d'abonnement pour un grand nombre de dispositifs de communication mobiles portatifs ;
- déterminer quels sont parmi le grand nombre de dispositifs de communication mobiles portatifs ceux qui sont actuellement connectés au fournisseur de services de diffusion mobiles (440), ladite détermination étant basée sur les sous-étapes suivantes :
• le dispositif de communication mobile portatif allume son récepteur de radiodiffusion mobile associé ;
• le processeur de signal du dispositif de communication mobile portatif crée un message indiquant que le récepteur de radiodiffusion mobile est actif ; et
• le dispositif de communication mobile portatif envoie le message à un emplacement où le fournisseur de services de diffusion mobiles peut accéder au message ;
- agréger uniquement le contenu préféré des dispositifs de communication mobiles portatifs actuellement connectés au fournisseur de services de diffusion mobiles (310) sur une pluralité canaux multiplexés dans le temps (340) ;
- recevoir une diffusion à partir du fournisseur de services de diffusion mobiles par les dispositifs de communication mobiles portatifs actuellement connectés au serveur du fournisseur de services de diffusion mobiles (310), la diffusion contenant des canaux multiplexés dans le temps du contenu préféré (360) ; et
- démultiplexer les canaux multiplexés dans le temps du contenu préféré (370) par les dispositifs de communication mobile portatifs actuellement connectés au serveur du fournisseur de services de diffusion mobiles (310), de sorte que chaque dispositif de communication mobile portatif peut afficher le contenu préféré associé (380).

2. Procédé de fourniture d'un contenu demandé à partir d'un fournisseur de services de diffusion mobiles à un dispositif de communication mobile portatif, dans lequel le fournisseur de services de diffusion mobiles diffuse un contenu vers un dispositif de communication mobile portatif, le procédé consistant à :
- recevoir une demande de contenu provenant d'au moins un dispositif de communication mobile portatif (330), la demande de contenu étant dérivée d'un contenu offert à la diffusion par le fournisseur de services de diffusion mobiles ;
- détecter si le dispositif de communication mobile portatif reçoit actuellement une diffusion à partir du fournisseur de services de diffusion mobiles (440), ladite détection étant basée sur les sous-étapes suivantes :
• le dispositif de communication mobile portatif allume son récepteur de radiodiffusion mobile associé ;
• le processeur de signal du dispositif de communication mobile portatif crée un message indiquant que le récepteur de radiodiffusion mobile est actif ; et
• le dispositif de communication mobile portatif envoie le message à un emplacement où le fournisseur de services de diffusion mobiles peut accéder au message ;
- agréger le contenu demandé sur une pluralité de canaux multiplexés dans le temps selon le contenu le plus demandé de dispositifs de communication mobiles portatifs qui reçoivent actuellement une diffusion à partir du fournisseur de services de diffusion mobiles (340) ; et
- diffuser la pluralité de canaux multiplexés dans le temps du contenu demandé agrégé (350).

3. Procédé selon la revendication 2, dans lequel la demande de contenu fait partie d'un profil d'abonnement qui comprend en outre des informations d'identification de dispositif de communication mobile portatif.

4. Procédé selon la revendication 2, consistant en outre à agréger le contenu demandé sur la pluralité de canaux multiplexés dans le temps en fonction des demandes de contenu des dispositifs de communication mobiles portatifs qui reçoivent actuellement une diffusion à partir du fournisseur de services de diffusion mobiles.

5. Dispositif de communication mobile portatif (110) pour demander un contenu à un fournisseur de services de diffusion mobiles (120), dans lequel le fournisseur de services de diffusion mobiles (120) diffuse le contenu vers le dispositif de communication mobile portatif (110), le dispositif de communication mobile portatif (110) comprenant :
- un moyen pour envoyer un profil d'abonnement au fournisseur de services de diffusion mobiles (222) par le dispositif de communication mobile portatif, le profil d'abonnement contenant un contenu préféré par le dispositif de communication mobile portatif parmi le contenu offert à la diffusion par le fournisseur de services de diffusion mobiles (310), le fournisseur de services de diffusion mobiles recevant et maintenant des profils d'abonnement pour un grand nombre de dispositifs de communication mobiles portatifs ;
- un moyen pour déterminer (130), quels sont parmi le grand nombre de dispositifs de communications mobiles portatifs ceux qui sont actuellement connectés au serveur du fournisseur de services de diffusion mobiles, comprenant :
• un moyen pour allumer le récepteur de radiodiffusion mobile associé au dispositif de communication mobile portatif ;
• un moyen pour créer un message indiquant que le récepteur de radiodiffusion mobile est actif ; et
• un moyen pour envoyer le message à un emplacement où le fournisseur de services de diffusion mobiles peut accéder au message ;
- un moyen pour recevoir une diffusion à partir du fournisseur de services de diffusion mobiles (254) par les dispositifs de communication mobiles portatifs actuellement connectés au serveur du fournisseur de services de diffusion mobiles (310), la diffusion contenant des canaux multiplexés dans le temps du contenu préféré ; et
- un moyen pour démultiplexer les canaux multiplexés dans le temps du contenu préféré (222) par les dispositifs de communication mobiles portatifs actuellement connectés au fournisseur de services de diffusion mobiles (310), de sorte que chaque dispositif de communication mobile portatif (110) peut afficher le contenu préféré associé.
